# EUROPEAN PATENT APPLICATION

(11) **EP 4 691 935 A1**
(43) Date of publication of application: **11.02.2026**
(21) Application number: 24936193.2
(22) Date of filing: 21.11.2024
(51) Int. Cl.: B65D 19/38, B65G 1/137, B65G 1/14, B65G 1/04

(54) **PALLET, GOODS TAKING AND PLACING METHOD, ELECTRONIC DEVICE, STORAGE MEDIUM, AND WAREHOUSING SYSTEM**

(30) Priority: 17.05.2024 CN 202410620840
(71) Applicant: Hai Robotics Co., Ltd., Shenzhen, Guangdong 518000 (CN); HAI intelligent Co., Ltd., Shenzhen, Guangdong 518000 (CN)
(72) Inventor: ZHANG, Feiyue, Shenzhen, Guangdong 518000 (CN); CHEN, Yuqi, Shenzhen, Guangdong 518000 (CN); LI, Xiaolong, Shenzhen, Guangdong 518000 (CN)
(74) Representative: Gulde & Partner
(86) International application number: PCT/CN2024/133524
(87) International publication number: WO 2025/236586

(57) **Abstract**

This application relates to the field of intelligent warehousing system technologies, and discloses a tray, a goods picking and placing method, an electronic device, a storage medium, and a warehousing system. The tray includes a base plate and a plurality of finger-shaped plates that extend along a first direction from a first side of the base plate. The plurality of finger-shaped plates are arranged at intervals along a second direction. A plate gap exists between two adjacent finger-shaped plates. The first direction and the second direction are both directions in a horizontal plane parallel to the base plate, and the first direction and the second direction intersect. The base plate and the plurality of finger-shaped plates are jointly configured to carry goods. This application reduces device costs, and improves running efficiency of a handling robot.

## Description

### CROSS-REFERENCES

This application claims priority to Chinese Patent Application No. 202410620840.1, filed with the China National Intellectual Property Administration on May 17, 2024 and entitled "TRAY, GOODS PICKING AND PLACING METHOD, ELECTRONIC DEVICE, STORAGE MEDIUM, AND WAREHOUSING SYSTEM", which is incorporated herein by reference in its entirety.

### TECHNICAL FIELD

Embodiments of this application relate to the field of intelligent warehousing system technologies, and specifically, to a tray, a goods picking and placing method, an electronic device, a storage medium, and a warehousing system.

### BACKGROUND OF THE INVENTION

An intelligent warehousing system is a system that efficiently stores and transports goods by using advanced information technologies and automation devices, and can implement automated identification, picking, transportation, and storage of goods. In the intelligent warehousing system, the goods are usually placed in trays, and the trays are then placed on a shelving unit. A handling robot retrieves the trays and the goods on the shelving unit together, and transports the trays and the goods together to a target position.

In some working scenarios of the intelligent warehousing system, the goods and the trays need to be separated, to retrieve the goods out of the trays. However, a current manner for separating goods and trays is complex in design, and has high costs and low efficiency. Therefore, how to achieve low-costs and high-efficiency separation of goods and trays is a problem that needs to be urgently resolved currently.

### SUMMARY OF THE INVENTION

In view of the foregoing problem, embodiments of this application provide a tray, a goods picking and placing method, an electronic device, a computer-readable storage medium, and a warehousing system, to resolve the problem that the manner for separating goods and trays is complex in design, and has high costs and low efficiency in the existing technology.

According to a first aspect of the embodiments of this application, a tray is provided. The tray includes a base plate and a plurality of finger-shaped plates that extend along a first direction from a first side of the substrate; the plurality of finger-shaped plates are arranged at intervals along a second direction; a plate gap exists between two adjacent finger-shaped plates; the first direction and the second direction are both directions in a horizontal plane parallel to the base plate, and the first direction and the second direction intersect; and the base plate and the plurality of finger-shaped plates are jointly configured to carry the goods.

In some embodiments, the tray is configured to pick and place goods from a second docking apparatus, the second docking apparatus includes a plurality of comb teeth arranged at intervals, a tooth gap exists between two adjacent comb teeth, and the plurality of comb teeth are configured to carry the goods; and positions of the finger-shaped plates and positions of the tooth gaps match, and positions of the plate gaps and positions of the comb teeth match; along the second direction, a width of the finger-shaped plate is less than a tooth gap matching the finger-shaped plate, and the plate gap is greater than a width of a comb tooth matching the plate gap, so that the finger-shaped plate can pass through the tooth gap along a vertical direction when the tray picks and places goods on the second docking apparatus, so that the tray contacts the bottom of goods placed on the comb teeth to transfer the goods from the second docking apparatus to the tray, or the goods in the tray are released from the tray to transfer the goods from the tray to the second docking apparatus.

In some embodiments, the tray is configured to be placed on a first docking apparatus, the first docking apparatus includes a plurality of cantilevers arranged at intervals, and the plurality of cantilevers are configured to carry the tray; and positions of the finger-shaped plates and positions of the cantilevers match, and along the second direction, the width of the finger-shaped plate is greater than a width of a cantilever matching the finger-shaped plate.

In some embodiments, the base plate and the plurality of finger-shaped plates jointly form a bottom plate of the tray, and a baffle connected to the bottom plate is vertically arranged on an outer periphery of the bottom plate.

In some embodiments, along the first direction, a size ratio of the finger-shaped plate to the base plate is greater than or equal to 2:1.

In some embodiments, the first direction is perpendicular to a side surface of the first side of the base plate, and the first direction is perpendicular to the second direction.

In some embodiments, a cross section of the finger-shaped plate is a rectangle.

In some embodiments, the bottom of the plurality of finger-shaped plates is configured to respectively contact a plurality of supporting members of a handling robot, so that the tray is carried by the plurality of supporting members.

According to a second aspect of the embodiments of this application, a goods picking and placing method is provided, applied to a handling robot. The handling robot includes a lifting assembly, a carrier platform, and a plurality of supporting members arranged at intervals on the carrier platform, the plurality of supporting members are configured to carry a tray, and the lifting assembly lifts or descends to drive the carrier platform to be lifted or to descend, where the tray includes a base plate and a plurality of finger-shaped plates that extend along a first direction from a first side of the base plate; the plurality of finger-shaped plates are arranged at intervals along a second direction; a plate gap exists between two adjacent finger-shaped plates; the first direction and the second direction are both directions in a plane parallel to the base plate, and the first direction and the second direction intersect; and the base plate and the plurality of finger-shaped plates are jointly configured to carry goods. The method includes: controlling the handling robot to move to a second docking position, where the plurality of supporting members of the handling robot carry the tray and the tray is lifted, first goods are placed in the tray, a second docking apparatus is arranged at the second docking position, the second docking apparatus includes a plurality of comb teeth arranged at intervals, a tooth gap exists between two adjacent comb teeth, and the plurality of supporting members are inserted into tooth gaps of the plurality of comb teeth when the handling robot moves to the second docking position; and controlling the lifting assembly to descend, so that the tray carried by the plurality of supporting members descends, where the plurality of finger-shaped plates pass through the tooth gaps along a vertical direction, the bottom of the first goods is in contact with the comb teeth, and the first goods are transferred to the second docking apparatus and the tray is separated from the first goods.

In some embodiments, after the first goods are transferred to the second docking apparatus, the method further includes: controlling the handling robot to move to a third docking position, where a third docking apparatus is arranged at the third docking position, the third docking apparatus includes a plurality of comb teeth arranged at intervals, a tooth gap exists between two adjacent comb teeth, the plurality of comb teeth are configured to carry second goods, and positions of the plurality of finger-shaped plates correspond to positions of tooth gaps of the plurality of comb teeth when the handling robot moves to the third docking position; controlling the lifting assembly to lift, so that the tray carried by the plurality of supporting members is lifted, and the plurality of finger-shaped plates pass through the tooth gaps along the vertical direction to contact the bottom of the second goods and lift the second goods to be separated from the third docking apparatus; and controlling the handling robot to move away from the third docking position.

In some embodiments, the plurality of supporting members of the handling robot carry the tray and the tray is lifted, and the second goods are placed in the tray; and the method further includes: controlling the handling robot to move to a fourth docking position, where a fourth docking apparatus is arranged at the fourth docking position, the fourth docking apparatus includes a plurality of cantilevers arranged at intervals, a beam gap exists between two adjacent cantilevers, and positions of the plurality of supporting members correspond to positions of beam gaps of the plurality of cantilevers when the handling robot moves to the fourth docking position; and controlling the lifting assembly to descend, where the plurality of supporting members pass through the beam gaps along the vertical direction, so that the tray is separated from the plurality of supporting members and is placed on the plurality of cantilevers.

In some embodiments, before the controlling the handling robot to move to the second docking position, the method further includes: controlling the handling robot to move to a first docking position, where a first docking apparatus is arranged at the first docking position, the first docking apparatus includes a plurality of cantilevers arranged at intervals, a beam gap exists between two adjacent cantilevers, the plurality of cantilevers carry the tray, the first goods are placed in the tray, and positions of the plurality of supporting members correspond to positions of beam gaps of the plurality of cantilevers when the handling robot moves to the first docking position; controlling the lifting assembly to lift, where the plurality of supporting members pass through the beam gaps along the vertical direction, so that the plurality of supporting members contact the bottom of the tray and lift the tray to be separated from the first docking apparatus; and controlling the handling robot to move away from the first docking position.

According to a third aspect of the embodiments of this application, an electronic device is provided, including a processor and a memory, the memory stores executable instructions, and the processor can execute the executable instructions to perform the foregoing goods picking and placing method.

According to a fourth aspect of the embodiments of this application, a computer-readable storage medium is provided, the storage medium stores executable instructions, and when the executable instructions are run on an electronic device, the electronic device is enabled to perform the foregoing goods picking and placing method.

According to a fifth aspect of the embodiments of this application, a warehousing system is provided, including: a shelving unit, configured to store a tray, where the tray stores goods, the tray includes a base plate and a plurality of finger-shaped plates that extend along a first direction from a first side of the base plate; the plurality of finger-shaped plates are arranged at intervals along a second direction; a plate gap exists between two adjacent finger-shaped plates; the first direction and the second direction are both directions in a horizontal plane parallel to the base plate, and the first direction and the second direction intersect; and the base plate and the plurality of finger-shaped plates are jointly configured to carry the goods; a workstation, configured to receive to-be-operated goods or output operated goods; and a handling robot, where the handling robot includes a lifting assembly, a carrier platform, and a plurality of supporting members arranged at intervals on the carrier platform, the plurality of supporting members are configured to carry the tray, and the lifting assembly lifts or descends to drive the carrier platform to be lifted or to descend; and the handling robot is configured to: retrieve the tray from the shelving unit, and separate the goods and the tray, to transfer the separated goods to the workstation.

In some embodiments, the handling robot performs the following steps: controlling the handling robot to travel to a second docking position, where the plurality of supporting members of the handling robot carry the tray and the tray is lifted, first goods are placed in the tray, a second docking apparatus is arranged at the second docking position, the second docking apparatus includes a plurality of comb teeth arranged at intervals, a tooth gap exists between two adjacent comb teeth, and the plurality of supporting members are inserted into tooth gaps of the plurality of comb teeth when the handling robot moves to the second docking position; and controlling the lifting assembly to descend, so that the tray carried by the plurality of supporting members descends, where the plurality of finger-shaped plates pass through the tooth gaps along a vertical direction, the bottom of the first goods is in contact with the comb teeth, and the first goods are transferred to the second docking apparatus and the tray is separated from the first goods.

In some embodiments, a plurality of cantilevers are arranged at intervals on both a first docking apparatus and a fourth docking apparatus of the shelving unit, and a beam gap exists between two adjacent cantilevers; a plurality of comb teeth are arranged at intervals on both the second docking apparatus and a third docking apparatus of the workstation, and a tooth gap exists between two adjacent comb teeth; the plurality of supporting members of the handling robot are a plurality of top plates extending along the first direction, and the plurality of top plates are arranged at intervals along the second direction; and when the handling robot is docked with the first docking apparatus or the fourth docking apparatus of the shelving unit, the top plate can pass through the beam gap between the cantilevers; and when the handling robot is docked with the second docking apparatus or the third docking apparatus of the workstation, the top plate can pass through the tooth gap between the comb teeth.

In some embodiments, the quantity of the cantilevers of the shelving unit and the quantity of the finger-shaped plates of the tray are both N, the handling robot includes N groups of top plates, each group of top plates includes two top plates, a top plate gap exists between the two top plates in each group of top plates, and positions of the N cantilevers, positions of the N finger-shaped plates, and positions of the N groups of top plates match; and along the second direction, a width of the finger-shaped plate is greater than a width of a cantilever matching the finger-shaped plate, and the top plate gap between the two top plates in each group of top plates is greater than a width of a cantilever matching the group of top plates and less than a width of a finger-shaped plate matching the group of top plates.

In some embodiments, the quantity of the finger-shaped plates of the tray is N, the quantity of the comb teeth of the workstation is N-1, the handling robot includes N groups of top plates, each group of top plates includes two top plates, a top plate group gap exists between two adjacent groups of top plates, positions of N-1 comb teeth, positions of plate gaps of the N finger-shaped plates, and positions of top plate group gaps of the N groups of top plates match, and positions of the N finger-shaped plates and positions of the N groups of top plates match; and along the second direction, a width of the finger-shaped plate is less than a tooth gap matching the finger-shaped plate, the plate gap is greater than a width of a comb tooth matching the plate gap, the top plate gap between the two top plates in each group of top plates is less than a width of a finger-shaped plate matching the group of top plates, and the top plate group gap between two adjacent groups of top plates is greater than a width of a comb tooth matching the top plate group gap.

According to the embodiments of this application, a plurality of finger-shaped plates are arranged at intervals on a side of a base plate of a tray, the base plate and the finger-shaped plates jointly carry goods, and plate gaps exist between the finger-shaped plates, so that supporting members of a handling robot can support the finger-shaped plates to carry the tray in which the goods are placed and lift the tray. After transporting the tray and the goods to a second docking position, the handling robot drives the supporting member to descend by using a lifting assembly. Because plate gaps exist between the finger-shaped plates, the finger-shaped plates, driven by the supporting members, can pass through tooth gaps of comb teeth arranged at the second docking position, so that the goods in the tray are left above the comb teeth, to separate the goods in the tray and the tray. This manner has a simple structure, reduces device costs, and can simplify steps of separating the goods and the tray, thereby improving running efficiency of the handling robot.

The foregoing descriptions are merely an overview of the technical solutions of this application. To understand the technical means of this application more clearly, implementation can be performed according to content of the specification. Moreover, to make the foregoing and other objectives, features, and advantages of this application more comprehensible, specific implementations of this application are particularly described below.

### BRIEF DESCRIPTION OF DRAWINGS

Various other advantages and benefits become clear to a person of ordinary skill in the art by reading the following detailed descriptions of exemplary implementations. The accompanying drawings are merely used for illustrating the preferred implementations and are not intended to constitute a limitation on this application. Throughout the accompanying drawings, the same reference numerals are used to represent the same components. In the accompanying drawings:
Figure 1a is a schematic structural diagram of a warehousing system according to an embodiment of this application;
Figure 1b is a schematic top planar view of a warehousing system according to an embodiment of this application;
Figure 2 is a schematic structural diagram of a first docking apparatus according to an embodiment of this application;
Figure 3 is a schematic structural diagram of a second docking apparatus according to an embodiment of this application;
Figure 4a is a three-dimensional diagram of a handling robot in a first state according to an embodiment of this application;
Figure 4b is a side view of a handling robot in a first state according to an embodiment of this application;
Figure 4c is a three-dimensional diagram of a handling robot in a second state according to an embodiment of this application;
Figure 5 is a schematic structural diagram of a scissor mechanism and a carrier platform according to an embodiment of this application;
Figure 6 is a schematic structural diagram of a tray according to an embodiment of this application;
Figure 7a is a schematic diagram of a size relationship between a finger-shaped plate of a tray and a cantilever of a first docking apparatus according to an embodiment of this application;
Figure 7b is a schematic diagram of a size relationship between a finger-shaped plate of a tray and a comb tooth of a second docking apparatus according to an embodiment of this application;
Figure 8 is a schematic flowchart of a goods picking and placing method according to an embodiment of this application;
Figure 9a is a diagram of a first position relationship between a handling robot and a first docking apparatus in a goods picking and placing process;
Figure 9b is a diagram of a second position relationship between a handling robot and a first docking apparatus in a goods picking and placing process;
Figure 9c is a diagram of a third position relationship between a handling robot and a first docking apparatus in a goods picking and placing process;
Figure 9d is a diagram of a first position relationship between a handling robot and a second docking apparatus in a goods picking and placing process;
Figure 9e is a top view of a first position relationship between a handling robot and a second docking apparatus in a goods picking and placing process;
Figure 9f is a side view of a first position relationship between a handling robot and a second docking apparatus in a goods picking and placing process;
Figure 9g is a diagram of a second position relationship between a handling robot and a second docking apparatus in a goods picking and placing process;
Figure 9h is a side view of a first position relationship between a handling robot and a third docking apparatus in a goods picking and placing process;
Figure 9i is a top view of a first position relationship between a handling robot and a third docking apparatus in a goods picking and placing process;
Figure 10 is a schematic flowchart of a goods picking and placing method according to an embodiment of this application; and
Figure 11 is a schematic structural diagram of an electronic device according to an embodiment of this application.

Reference numerals in the detail description are as follows:
100: Warehousing system;
10: shelving unit;
20: workstation; 21: inbound workstation; 22: outbound workstation; 23: picking workstation; 24: inbound and outbound workstation;
30: tray; 31: base plate; 32: finger-shaped plate; 33: plate gap; 34: bottom plate; 35: baffle;
40: handling robot;
41: chassis; 411: housing; 412: driving wheel;
42: carrier platform; 421: first top plate; 422: second top plate; 423: fixed plate; 424: first connecting plate; 425: second connecting plate; 4251: sliding hole;
43: lifting assembly; 43a: first end; 43b: second end; 431: scissor mechanism; 4311: support rod; 4311a: first support rod; 4311b: second support rod; 4311c: third support rod; 4311d: fourth support rod; 4312: connecting rod; 4312a: first connecting rod; 4312b: second connecting rod;
50: control apparatus;
61: first docking apparatus; 611: first crossbeam; 612: cantilever; 62: second docking apparatus; 621: second crossbeam; 622: comb tooth;
70: goods;
300: electronic device; 302: processor; 304: memory; 306: computer program.

### DETAILED DESCRIPTION

Embodiments of technical solutions of this application are described in detail below with reference to the accompanying drawings. The following embodiments are only used to illustrate the technical solutions of this application more explicitly, and are thus only interpreted as examples, rather than used to limit the protection scope of this application.

Unless otherwise defined, meanings of all technical and scientific terms used herein are the same as those usually understood by a person skilled in the art to which this application belongs. The terms used herein are merely intended to describe objectives of the specific embodiments, but are not intended to limit this application. The terms "include", "have", and any variant thereof in the description, claims and the brief description of the drawings of this application are intended to cover a non-exclusive inclusion.

In the descriptions of the embodiments of this application, technical terms "first", "second", and the like are used merely for distinguishing different objects, and shall not be construed as indicating or implying relative importance or implying the quantity, a specific order, or a primary-secondary relationship of indicated technical features. In the descriptions of the embodiments of this application, "a plurality of" means two or more, unless otherwise definitely and specifically limited.

The "embodiment" mentioned in the specification means that particular features, structures, or characteristics described with reference to the embodiment may be included in at least one embodiment of this application. The term appearing at various positions in the specification does not necessarily refer to a same embodiment, or an independent or alternative embodiment mutually exclusive with another embodiment. A person skilled in the art explicitly or implicitly understands that the embodiments described in the specification may be combined with other embodiments.

The term "and/or" in the descriptions of the embodiments of this application describes only an association relationship for describing associated objects and represents that three relationships may exist. For example, A and/or B may represent the following three cases: A exists, both A and B exist, and B exists. In addition, the character "/" in this specification generally indicates an "or" relationship between the associated objects.

In the descriptions of the embodiments of this application, the term "a plurality of" means two or more (including two). Similarly, "a plurality of groups" means two or more groups (including two groups), and "a plurality of pieces" means two or more pieces (including two pieces).

In the descriptions of the embodiments of this application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicating directional or positional relationships are based on the directional or positional relationships shown in the drawings and are merely for the convenience of describing the embodiments of this application and simplifying the description, rather than indicating or implying that the noted devices or elements need to have specific directions or need to be constructed and operated in specific directions. Therefore, these terms should not be construed as limitations on the embodiments of this application.

In the descriptions of the embodiments of this invention, unless otherwise explicitly specified or defined, the technical terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components, or an interaction relationship between two components. A person of ordinary skill in the art may understand the specific meanings of the foregoing terms in the embodiments of this application according to specific situations.

An intelligent warehousing system is a system that efficiently stores and transports goods by using advanced information technologies and automation devices, and can implement automated identification, picking, transportation, and storage of goods. In the intelligent warehousing system, goods are usually stored by using cartons. However, because the cartons are easily deformed and cannot be accurately stored and retrieved by an automatic transport apparatus such as a handling robot, the cartons are usually placed in a tray made of a firmer and more durable material, and then placed on a shelving unit. In this way, the cartons can be prevented from being damaged in a storage or transportation process. Some goods may alternatively be directly placed in the tray without additional carton packaging. The handling robot may retrieve the tray and the cartons together from the shelving unit, and carry the tray and the cartons together to a target position, for example, a conveyor line of each workstation or another shelving unit. The tray usually has an identification code, such as a bar code or a quick response code, which makes it easier to quickly identify and track goods in the cartons in a warehouse management system. In addition, a size and a shape of the tray are generally standardized, which also makes it easy for the handling robot to interact with the tray.

In some working scenarios of the intelligent warehousing system, the goods and the trays need to be separated, to retrieve the goods out of the trays. The goods herein may be individual goods, cartons storing goods, or empty cartons. Several technical solutions for separating the cartons and the tray are described below by using the cartons as an example.

For example, the cartons are retrieved from the tray by using a robot arm, to automatically separate the cartons from the tray. However, costs of the robot arm are high.

A through hole may further be provided at the bottom of the tray. After the tray loaded with a carton arrives at a separation device in the conveyor line of the workstation, a top pin plate is lifted from below the conveyor line. A top pin extends through the through hole at the bottom of the tray to lift the carton for a distance, so that a gap is formed between the carton and the tray. Then, an arm-shaped structure (an arm for short below) of the workstation avoids the top pin and moves to below the carton, the top pin plate is lowered to descend the carton to the arm, and subsequently, the arm transports the carton to another plane, to separate the carton from the tray. In such a solution, the design of the workstation structure is complex and costs are high. In addition, because there are many mechanical actions that cannot be performed in parallel, efficiency is low.

For another example, a concave-convex structure is provided on the inner side of the bottom of the tray and the side wall of the tray, so that after the carton is placed in the tray, a gap remains between the bottom of the carton and the bottom of the tray. After the tray loaded with the carton arrives at the separation device of the workstation, a comb teeth-shaped structure of the workstation extends out to enter the gap between the carton and the tray. Subsequently, the comb teeth-shaped structure transports the carton to another plane, to separate the carton and the tray. Because the concave-convex structure is provided in the tray, material costs of the tray are increased, and an available inner size of the tray is reduced.

Therefore, how to achieve low-costs and high-efficiency separation of cartons and trays is a problem that needs to be urgently resolved currently.

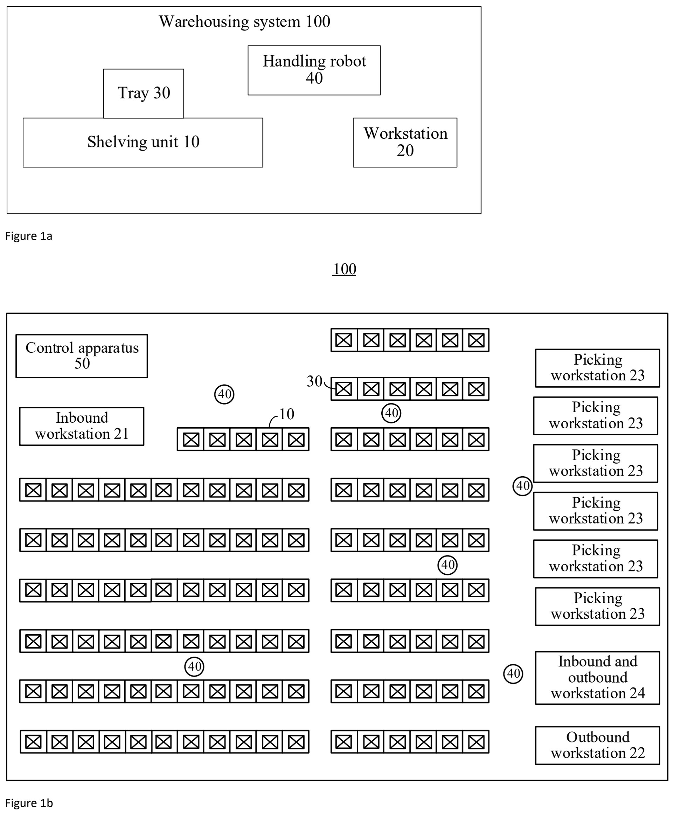

Figure 1a is a schematic structural diagram of a warehousing system according to an embodiment of this application; and Figure 1b is a schematic top planar view of a warehousing system according to an embodiment of this application. As shown in Figure 1a and Figure 1b, the warehousing system 100 includes a shelving unit 10 and a workstation 20. The shelving unit 10 is configured to store containers. The container is configured to accommodate goods. The goods may be individual goods, cartons storing goods, or empty cartons. The container may be a tote or a tray. A tray 30 shown in the figure is used as an example for description in this embodiment of this application. The workstation 20 is configured to receive to-be-operated goods or output operated goods.

As shown in Figure 1b, the warehousing system 100 includes a plurality of shelving units 10. The workstation 20 may include an inbound workstation 21, an outbound workstation 22, and a picking workstation 23. A person skilled in the art should understand that each of the foregoing various workstations 20 may be a workstation 20 having only one function, or may be a workstation 20 having two or three functions, for example, an inbound and outbound workstation 24. A conveyor line is usually provided for the workstation 20. The conveyor line of the workstation 20 may directly convey goods, or may convey the tray 30 containing goods, or may convey an empty tray 30.

The warehousing system 100 further includes a handling robot 40. One or more handling robots 40 may be provided. The handling robot 40 is responsible for transferring goods between the shelving unit 10 and the conveyor line of the workstation 20. The handling robot 40 can transport to-be-stored goods from the inbound workstation 21 to the shelving unit 10, transport to-be-delivered goods from the shelving unit 10 to the outbound workstation 22, or transport to-be-picked goods from the shelving unit 10 to the picking workstation 23. For example, the handling robot 40 retrieves, from the shelving unit 10, a tray 30 placing goods, and separates the goods and the tray 30, to transfer the separated goods to the workstation 20. The warehousing system 100 further includes a control apparatus 50, configured to dispatch the handling robot 40 to perform a transport task.

Aisles are disposed between the shelving units 10, between the shelving unit 10 and the workstation 20, and/or between the workstations 20, for the handling robot 40 or a staff member to pass. The handling robot 40 may be an automatically guided robot, and can implement positioning by identifying guide lines or graphic codes (such as quick response codes or bar codes) on the ground, to implement movement within the warehousing system 100.

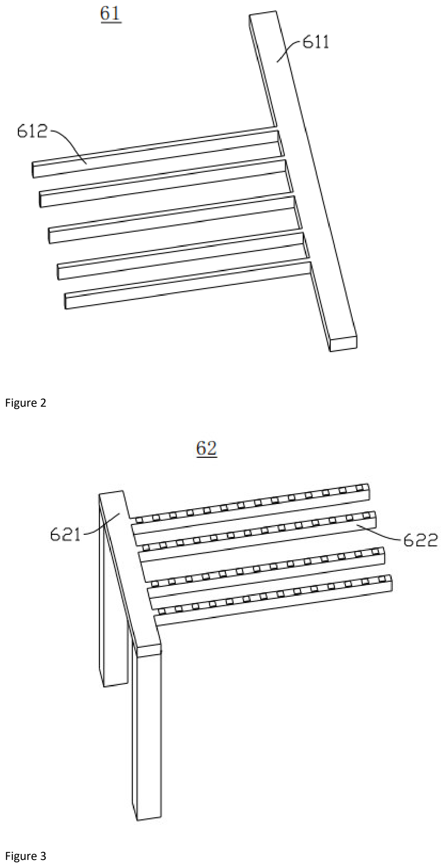

The shelving unit 10 and the workstation 20 have a docking position, and a docking apparatus is disposed at the docking position. The handling robot 40 is docked with the docking apparatus of the shelving unit 10 or the workstation 20, to store or retrieve the tray 30 and/or the goods. The shelving unit 10 and the workstation 20 have docking apparatuses of at least two structures: a first docking apparatus and a second docking apparatus. Figure 2 is a schematic structural diagram of a first docking apparatus according to an embodiment of this application. As shown in Figure 2, a first docking apparatus 61 may be arranged at a first docking position of the shelving unit 10 or the workstation 20. The first docking apparatus 61 includes a first crossbeam 611 and a plurality of cantilevers 612 configured to carrying the tray 30. The first crossbeam 611 is fixed to a pillar of the shelving unit 10 in a manner such as bolting. The plurality of cantilevers 612 are vertically connected to the first crossbeam 611 in a horizontal plane. Certainly, the first docking apparatus 61 may alternatively directly carry the goods. Figure 3 is a schematic structural diagram of a second docking apparatus according to an embodiment of this application. As shown in Figure 3, a second docking apparatus 62 may be arranged at a second docking position of the shelving unit 10 or the workstation 20. The second docking apparatus 62 includes a second crossbeam 621 and a plurality of comb teeth 622 arranged at intervals. The second crossbeam 621 is fixed to a pillar of the conveyor line of the workstation 20 in a manner such as bolting. The plurality of comb teeth 622 are vertically connected to the second crossbeam 621 in a horizontal plane. A tooth gap exists between two adjacent comb teeth 622. The plurality of comb teeth 622 are configured to carry goods. Certainly, the second docking apparatus 62 may alternatively be configured to carry the tray 30.

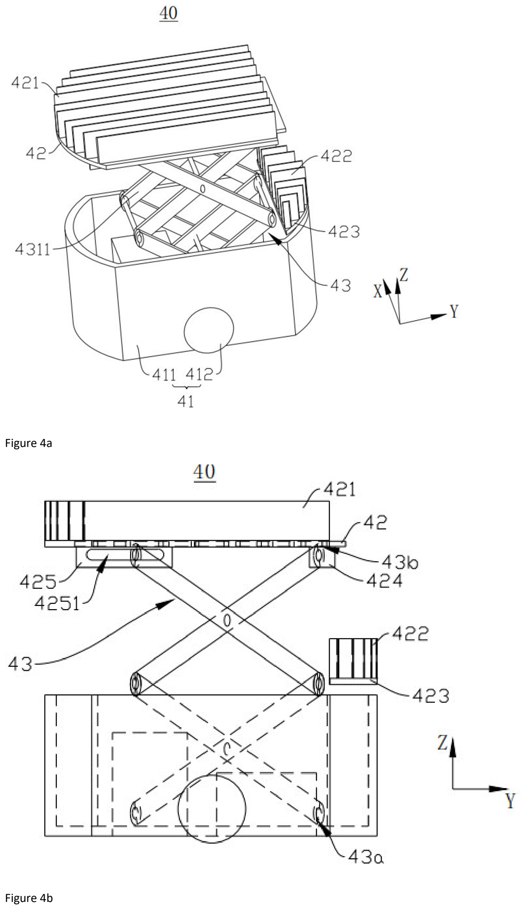

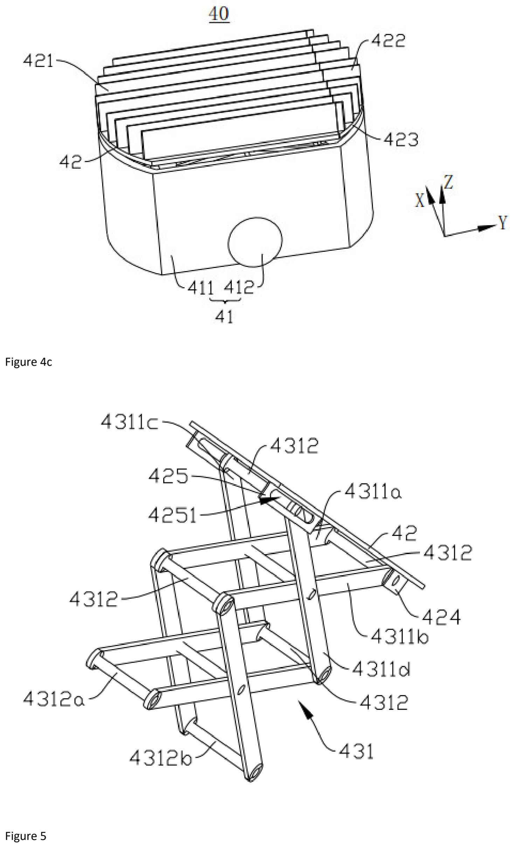

Figure 4a is a three-dimensional diagram of a handling robot in a first state according to an embodiment of this application; Figure 4b is a side view of a handling robot in a first state according to an embodiment of this application; and Figure 4c is a three-dimensional diagram of a handling robot in a second state according to an embodiment of this application. The handling robot 40 includes a chassis 41, a carrier platform 42, and a lifting assembly 43. Certainly, the handling robot 40 usually further includes components that are not shown in the figure, such as a moving motor, a main control component, and a battery.

The chassis 41 includes a housing 411 and a moving mechanism arranged on the housing 411. The moving mechanism includes a driving component (not shown in the figure) and a driving wheel 412. The driving component drives the driving wheel 412 to rotate, to implement movement of the handling robot 40. For example, the driving component drives the driving wheel 412 to rotate forward, to implement forward movement of the handling robot 40; or the driving component drives the driving wheel 412 to rotate reversely, to implement backward movement of the handling robot 40.

The lifting assembly 43 includes a first end 43a and a second end 43b (as shown in Figure 4b) that are opposite along a vertical direction (a Z direction or a negative direction of the Z direction, namely, a -Z direction, shown in the figure). The first end 43a is fixed to the chassis 41. The second end 43b can move toward a direction away from the first end 43a (the Z direction shown in the figure) or a direction toward the first end 43a (the negative direction of the Z direction, namely, the -Z direction, shown in the figure) along the vertical direction. When the lifting assembly is lifted, the second end 43b moves toward the direction away from the first end 43a along the vertical direction. When the lifting assembly descends, the second end 43b moves toward the direction toward the first end 43a along the vertical direction. In the first state shown in Figure 4a and Figure 4b, the second end 43b of the lifting assembly 43 is located at a position away from the first end 43a. In the second state shown in Figure 4c, the second end 43b of the lifting assembly 43 is located at a position near the first end 43a.

The carrier platform 42 is arranged at the second end 43b of the lifting assembly 43. A plurality of supporting members are arranged at intervals on the carrier platform 42, and the plurality of supporting members are configured to carry the tray 30 /or the goods. Lifting or descending of the lifting assembly 43 can drive the carrier platform 42 to be lifted or to descend, to drive the tray 30 carried by the supporting members to be lifted or to descend. In a process of being docked with the first docking apparatus 61 to pick or place the tray 30 or being docked with the second docking apparatus 62 to pick or place the goods, the supporting members pass through beam gaps between the cantilevers 612 of the first docking apparatus 61 or pass through tooth gaps between the comb teeth 622 of the second docking apparatus 62.

The carrier platform 42 is a flat structure. The supporting member includes one of a top pin, a top plate, and a top block, or a combination thereof, provided that the supporting member can support the goods and can pass through the beam gaps of the cantilevers or the tooth gaps of the comb teeth. For example, a shape, a size, and the quantity of the supporting members match a shape, a size, and the quantity of the beam gaps between the cantilevers and a shape, a size, and the quantity of the tooth gaps between the comb teeth. In the embodiment shown in the figure, the supporting member is of a top plate structure. As shown in Figure 4a to Figure 4c, the supporting member includes a plurality of first top plates 421, each first top plate 421 extends along a first direction (a Y direction), and the plurality of first top plates 421 are arranged at intervals along a second direction (an X direction).

A fixed plate 423 is further arranged on the handling robot 40, the fixed plate 423 is fixed to the top of the housing 411 of the chassis 41, and a plurality of second top plates 422 are arranged at intervals on the fixed plate 423. The first top plate 421 and the second top plate 422 are jointly configured to carry the tray 30 and/or the goods. The first top plate 421 is arranged on the carrier platform 42, and thus can be lifted and lowered with lifting and descending of the lifting assembly 43. Therefore, the first top plate 421 can pass through the beam gaps of the cantilevers 612 or the tooth gaps of the comb teeth 622 in a process of picking and placing the tray 30 or the goods. The second top plate 422 is arranged on the fixed plate 423, and the fixed plate 423 does not move with lifting and descending of the lifting assembly 43. Therefore, the second top plate 422 does not pass through the beam gaps of the cantilevers 612 or the tooth gaps of the comb teeth 622.

Movement of the second end 43b relative to the first end 43a of the lifting assembly 43 may be implemented in a manner such as a scissor, a lifting bar (which is hydraulic, electric, or pneumatic), spiral lifting, chain lifting, gear lifting, or crank lifting. In this embodiment of this application, the scissor is used as an example for description. The scissor mechanism can implement a large movement stroke, and has a small volume when contracted, so that a requirement of an application scenario for a small volume of the handling robot 40 is satisfied. The scissor mechanism has a strong load capability, lifts and descends smoothly, and can ensure safe transportation of the tray and the goods.

Figure 5 is a schematic structural diagram of a scissor mechanism and a carrier platform according to an embodiment of this application. As shown in Figure 5, and still referring to Figure 4a and Figure 4b, the lifting assembly 43 includes a driving mechanism (not shown in the figure) and a scissor mechanism 431 that are connected to each other. A bottom end and a top end of the scissor mechanism 431 that are opposite in the vertical direction are respectively the first end 43a and the second end 43b of the lifting assembly 43. The driving mechanism is configured to: drive the scissor mechanism 431 to extend, so that the second end 43b moves in a direction away from the first end 43a in the vertical direction; and drive the scissor mechanism 431 to contract, so that the second end 43b moves in a direction toward the first end 43a in the vertical direction.

The driving mechanism of the lifting assembly 43 may be a motor. An output axis of the motor rotates, and the rotation of the output axis of the motor is converted into linear movement by using a rotary-linear movement conversion mechanism (such as a ball screw mechanism, a crank slider mechanism, or a gear rack mechanism), to drive the scissor mechanism 431 to move, so as to drive the scissor mechanism 431 to extend and contract. A moving motor of the handling robot 40 may be reused as the driving mechanism of the lifting assembly 43. In other words, the moving motor is configured to drive the handling robot 40 to move, and is further configured to drive the scissor mechanism 431 to lift. In this way, there is no need to additionally provide a lifting motor, thereby simplifying a structural design and reducing costs.

The scissor mechanism 431 includes two groups of support rods arranged opposite to each other along a horizontal direction (the X direction shown in the figure). Each group of support rods includes at least two support rods 4311. The at least two support rods 4311 are arranged in an intersecting manner and are hinged at an intersection point. Two ends of each support rod 4311 are rotatably connected to two ends of a support rod 4311 at a corresponding position in another group of support rods through a connecting rod 4312. The driving mechanism drives at least one connecting rod 4312 to move, to drive the two groups of support rods to extend or contract. An axial direction of the connecting rod 4312 is disposed along the X direction. The driving mechanism drives at least one of two connecting rods 4312 arranged opposite to each other along the Y direction to move toward the other, to drive the two groups of support rods to extend, so that the second end 43b moves toward a direction away from the first end 43a along the vertical direction to lift the tray 30; the driving mechanism drives at least one of two connecting rods 4312 arranged opposite to each other along the Y direction to move away from the other, to drive the two groups of support rods to contract, so that the second end 43b moves toward a direction toward the first end 43a along the vertical direction, to drive the tray 30 to descend. For example, as shown in Figure 5, a first connecting rod 4312a is slidably connected to the chassis 41, a second connecting rod 4312b is fixedly connected to the chassis 41, the driving mechanism drives the first connecting rod 4312a to move toward the second connecting rod 4312b, so that an angle between two support rods 4311 that are hinged in an intersecting manner in each group of support rods becomes smaller, and the second end 43b moves toward a direction away from the first end 43a in the vertical direction to lift the tray 30; the driving mechanism drives the first connecting rod 4312a to move away from the second connecting rod 4312b, so that an angle between two support rods 4311 that are hinged in an intersecting manner in each group of support rods becomes larger, and the second end 43b moves toward a direction toward the first end 43a in the vertical direction, to drive the tray 30 to descend. Certainly, the driving mechanism may alternatively drive both the first connecting rod 4312a and the second connecting rod 4312b to move toward each other or move away from each other, so that the scissor mechanism 431 extend or contract. The scissor mechanism 431 in a second-level scissor mechanism, to be specific, each group of support rods includes two pairs of support rods 4311 that are hingedly arranged in an intersecting manner. The two pairs of support rods 4311 are arranged in the vertical direction. An end of each pair of support rods 4311 and an end of the other pair of support rods 4311 that are adjacent to each other are rotatably connected through the connecting rod 4312. By using the second-level scissor mechanism, when a size of the chassis 41 of the handling robot 40 is fixed, a larger movement stroke can be provided for the second end 43b. Certainly, more levels of the scissor mechanism may alternatively be used according to a requirement, to implement a larger movement stroke of the second end 43b. This is not limited in this application.

In the scissor mechanism 431, a carrier platform 42 is disposed on a support rod 4311 located uppermost in the vertical direction. One end of the bottom of the carrier platform 42 is hinged to two support rods 4311, and the other end is slidably connected to other two support rods 4311. Specifically, two first connecting plate 424 are arranged at one end of the bottom of the carrier platform 42, and the first support rod 4311a and the second support rod 4311b are respectively hinged to the two first connecting plate 424 through the connecting rod 4312. Two second connecting plates 425 are arranged on the other end of the bottom of the carrier platform 42, a sliding hole 4251 is provided on the second connecting plate 425, a connecting rod 4312 can move in the sliding hole 4251, and a third support rod 4311c and a fourth support rod 4311d are respectively slidably connected to the two second connecting plates 425 through the connecting rod 4312.

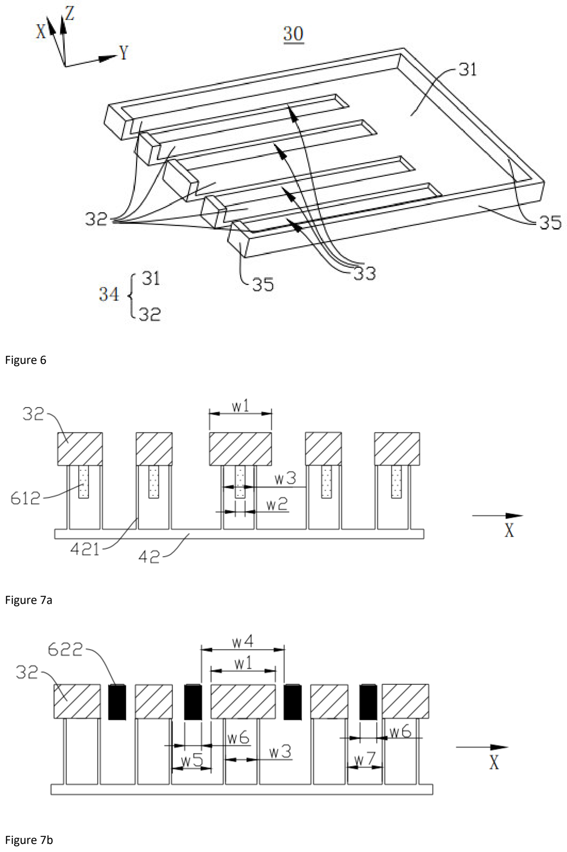

Figure 6 is a schematic structural diagram of a tray according to an embodiment of this application. As shown in Figure 6, a tray 30 includes a base plate 31 and a plurality of finger-shaped plates 32 extending from a first side of the base plate 31 along a first direction (a Y direction), and the plurality of finger-shaped plates 32 are arranged at intervals along a second direction (an X direction). A plate gap exists between two adjacent finger-shaped plates 32, the first direction and the second direction are both directions in a horizontal plane parallel to the base plate 31, and the first direction and the second direction intersect, in other words, there is an angle between the first direction and the second direction. The base plate 31 and the plurality of finger-shaped plates 32 are jointly configured to carry goods.

In the embodiment shown in the figure, the first direction (the Y direction) is perpendicular to a side surface of the first side of the base plate 31, and the first direction (the Y direction) is perpendicular to the second direction (the X direction). In this way, the finger-shaped plate 32 extends vertically from the side surface of the first side of the base plate 31, which not only facilitates processing, but also makes an outer peripheral shape of the tray 30 regular, thereby improving utilization of a storage space of a shelving unit 10.

A cross section of the finger-shaped plate 32 is rectangular. The rectangular cross section not only facilitates processing, but also can enlarge a transverse size of the finger-shaped plate 32 in a horizontal plane, thereby supporting goods more stably.

The base plate 31 and the finger-shaped plate 32 may be both in a flat shape. The base plate 31 and the plurality of finger-shaped plates 32 jointly form a bottom plate 34 of the tray 30, and a baffle 35 connected to the bottom plate 34 is vertically arranged on an outer periphery of the bottom plate 34. The baffle 35 is configured to prevent the goods from being retrieved from the tray 30, and a height of the baffle 35 may be lower than that of a conventional tote. The goods are placed on the bottom plate 34 jointly formed by the base plate 31 and the plurality of finger-shaped plates 32. The bottom of the plurality of finger-shaped plates 32 is configured to respectively contact a plurality of supporting members of the handling robot 40, so that the tray 30 is carried by the plurality of supporting members. For example, the first top plate 421 of the handling robot 40 contacts the finger-shaped plate 32, and the second top plate 422 contacts the base plate 31, to jointly carry the tray 30.

In the first direction (the Y direction), a size ratio of the finger-shaped plate 32 to the base plate 31 is greater than or equal to 2:1. In this way, when a size of the bottom plate 34 is fixed, a size of the base plate 31 can be reduced, thereby saving materials and reducing costs.

The tray 30 is configured to be placed on the first docking apparatus 61. When the tray 30 is placed on the first docking apparatus 61, the base plate 31 and the finger-shaped plate 32 of the tray 30 may both contact a cantilever 612 of the first docking apparatus 61. A position of the finger-shaped plate 32 matches a position of the cantilever 612, so that the finger-shaped plate 32 can contact the cantilever 612.

The quantity of the finger-shaped plates 32 may be the same as the quantity of cantilevers 612 of the first docking apparatus 61. For example, as shown in Figure 2 and Figure 6, the quantity of the cantilevers 612 and the quantity of the finger-shaped plates 32 are both five, and positions of the five finger-shaped plates 32 match positions of the five cantilevers 612 one-to-one. Certainly, the quantity of the finger-shaped plate 32 may alternatively be less than the quantity of the cantilevers 612. In this way, when the tray 30 is placed on the first docking apparatus 61, the finger-shaped plate 32 contact only some cantilevers 612 of the plurality of cantilevers 612, and only a position of a finger-shaped plate 32 that contacts the cantilever 612 in the plurality of finger-shaped plates 32 matches a position of the cantilever 612. The quantity of the finger-shaped plates 32 may alternatively be greater than the quantity of the cantilevers 612. In this way, when the tray 30 is placed on the first docking apparatus 61, some finger-shaped plates 32 of the plurality of finger-shaped plates 32 do not contact the cantilevers 612 but are in a suspended state, and only a position of a finger-shaped plate 32 that contacts the cantilever 612 in the plurality of finger-shaped plates 32 matches a position of the cantilever 612.

The handling robot 40 may lift by using the lifting assembly 43, to drive the first top plate 421 to lift, and pick and place the tray 30 from the first docking apparatus 61. Figure 7a is a schematic diagram of a size relationship between a finger-shaped plate of a tray and a cantilever of a first docking apparatus according to an embodiment of this application. As shown in Figure 7a, along a second direction (an X direction), a width w1 of the finger-shaped plate 32 is greater than a width w2 of a cantilever 612 matching the finger-shaped plate 32. In this way, when the handling robot 40 retrieves the tray 30 from the first docking position, after the first top plate 421 extends upward from the bottom of the cantilever 612 in the vertical direction through beam gaps of the plurality of cantilevers 612, two first top plates 421 located at two sides of each cantilever 612 can contact finger-shaped plates 32 carried by the cantilever 612 to lift the tray 30, to stably carry and lift the tray 30.

In some embodiments, the quantity of the cantilevers 612 of the shelving unit 10 and the quantity of the finger-shaped plates 32 of the tray 30 are both N. The handling robot 40 includes N groups of first top plates. Each group of first top plates includes two first top plates 421, and a top plate gap exists between the two first top plates 421 in each group of first top plates. Positions of the N cantilevers 612, positions of the N finger-shaped plates 32, and positions of the N groups of first top plates match (in other words, each group of first top plates is configured to support one finger-shaped plate 32). N is an integer, and N ≥ 2. As shown in Figure 2 and Figure 6, the quantity of the cantilever 612 of the shelving unit 10 and the quantity of the finger-shaped plates 32 of the tray 30 are both five. The handling robot 40 includes five groups of first top plates. Each group of first top plates includes two first top plates 421. A top plate gap exists between the two first top plates 421 in each group of first top plates. Positions of the five cantilevers 612, positions of the five finger-shaped plates 32, and positions of the five groups of first top plates match. Still referring to Figure 7a, along the second direction (the X direction), the width w1 of the finger-shaped plate 32 is greater than the width w2 of the cantilever 612 matching the finger-shaped plate 32, and the top plate gap (whose size is w3 as shown in the figure) between the two first top plates 421 in each group of first top plates is greater than the width w2 of the cantilever 612 matching the group of first top plates and less than the width w1 of the finger-shaped plate 32 matching the group of first top plates.

The handling robot 40 may use the tray 30 to pick and place the goods from the second docking apparatus 62. Figure 7b is a schematic diagram of a size relationship between a finger-shaped plate of a tray and a comb tooth of a second docking apparatus according to an embodiment of this application. As shown in Figure 7b, a position of the finger-shaped plate 32 matches a position of the tooth gap of the comb teeth 622, and a position of the plate gap matches a position of the comb teeth 622. Along the second direction (the X direction), the width w1 of the finger-shaped plate 32 is less than a tooth gap (whose size is w4 as shown in the figure) matching the finger-shaped plate 32, and the plate gap (whose size is w5 as shown in the figure) is greater than a width w6 of the comb teeth 622 matching the plate interval, so that the finger-shaped plate 32 can pass through the tooth gap along the vertical direction when the tray 30 picks and places goods on the second docking apparatus 62, so that the tray 30 contacts the bottom of goods placed on the comb teeth 622 to transfer the goods from the second docking apparatus 62 to the tray 30, or the goods in the tray 30 are released from the tray 30 to transfer the goods from the tray 30 to the second docking apparatus 62.

In the embodiment shown in Figure 7b, the quantity of the comb teeth 622 is four, the quantity of the tooth gaps is three, the quantity of the finger-shaped plates 32 is five, and the quantity of the plate gaps is four. In the five finger-shaped plates 32, three finger-shaped plates 32 located in the middle match the three tooth gaps of the comb teeth 622, and two finger-shaped plates 32 located at the outer sides are not located in the tooth gaps of the comb teeth 622. Positions of the four plate gaps match positions of the four comb teeth 622, and the four comb teeth 622 are located in the four plate gaps. In other words, when the tray 30 picks and places the goods from the second docking apparatus 62, the three finger-shaped plates 32 pass through the three tooth gaps in the vertical direction, and existence of the four plate gaps makes movement of the tray 30 not be obstructed by the comb teeth 622.

In some embodiments, the quantity of the finger-shaped plates 32 of the tray 30 is N, the quantity of the comb teeth 622 of the workstation 20 is N-1, the handling robot 40 includes N groups of first top plates, each group of first top plates includes two first top plates 421, a top plate group gap exists between two adjacent groups of first top plates, positions of N-1 comb teeth 622, positions of plate gaps of the N finger-shaped plates 32, and positions of top plate group gaps of the N groups of first top plates match, and positions of the N finger-shaped plates 32 and positions of the N groups of first top plates match (in other words, each group of first top plates is configured to support one finger-shaped plate 32). N is an integer, and N ≥ 2. As shown in Figure 7b, along the second direction (the X direction), a width w1 of the finger-shaped plate 32 is less than a tooth gap (whose size is w4 as shown in the figure) matching the finger-shaped plate 32, the plate gap (whose size is w5 as shown in the figure) is greater than a width w6 of a comb tooth 622 matching the plate gap, the top plate gap (whose size is w3 as shown in the figure) between the two first top plates 421 in each group of first top plates is less than a width w1 of a finger-shaped plate 32 matching the group of first top plates, and the top plate group gap (whose size is w7 as shown in the figure) between two adjacent groups of first top plates is greater than a width w6 of a comb tooth 622 matching the top plate group interval.

The following describes the goods picking and placing method by using the tray 30 in the foregoing embodiments.

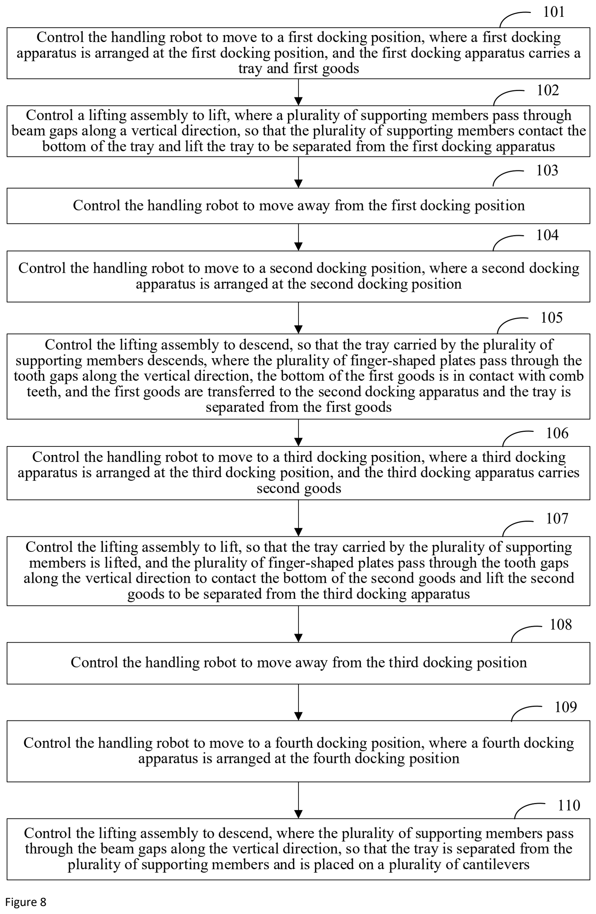

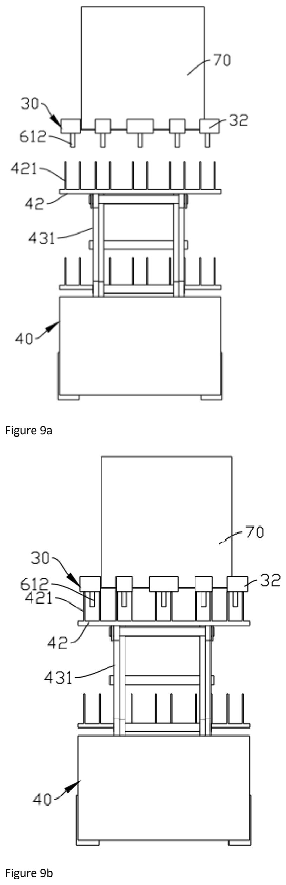

Figure 8 is a schematic flowchart of a goods picking and placing method according to an embodiment of this application. The method is applied to the foregoing handling robot. Figure 9a to Figure 9h are diagrams of position relationships between a handling robot and various docking apparatuses in a process of picking and placing goods and position relationships between a tray and goods.

As shown in Figure 8, the goods picking and placing method includes the following steps.

Step 101: controlling the handling robot to move to a first docking position, where a first docking apparatus is arranged at the first docking position, and the first docking apparatus carries a tray and first goods.

Step 102: controlling a lifting assembly to lift, where a plurality of supporting members pass through beam gaps along a vertical direction, so that the plurality of supporting members contact the bottom of the tray and lift the tray to be separated from the first docking apparatus.

Step 103: controlling the handling robot to move away from the first docking position.

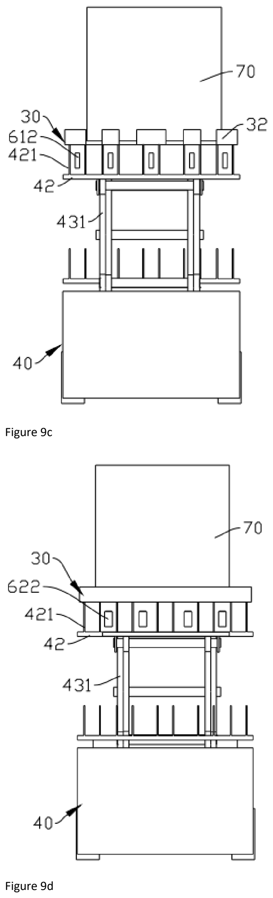

In step 101 to step 103, the first docking position is a docking position of a shelving unit, and the handling robot retrieves a tray containing goods from the shelving unit. First, the handling robot 40 travels to the first docking position (as shown in Figure 9a). In this case, positions of a plurality of first top plates 421 correspond to positions of beam gaps of a plurality of cantilevers 612. A scissor mechanism 431 extends to lift the carrier platform 42, so that the first top plate 421 is lifted and contacts the bottom of the tray 30, and specifically, contacts the bottom of finger-shaped plates 32 of the tray 30 (as shown in Figure 9b), and the tray 30 is separated from the cantilever 612 of the shelving unit for a particular distance (as shown in Figure 9c), and then the handling robot moves out of the first docking position. That the handling robot 40 moves out of the first docking position means that the handling robot 40 moves out from below the first docking apparatus, or passes through under the first docking apparatus. In the following specification, a process of moving out of another docking position is also the same.

Step 104: controlling the handling robot to move to a second docking position, where a second docking apparatus is arranged at the second docking position.

Step 105: controlling the lifting assembly to descend, so that the tray carried by the plurality of supporting members descends, where the plurality of finger-shaped plates pass through the tooth gaps along the vertical direction, the bottom of the first goods is in contact with comb teeth, and the first goods are transferred to the second docking apparatus and the tray is separated from the first goods.

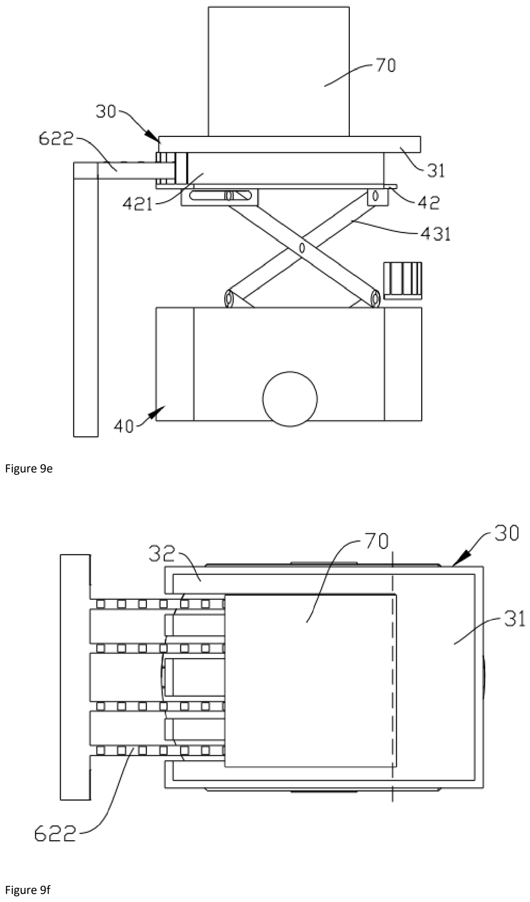

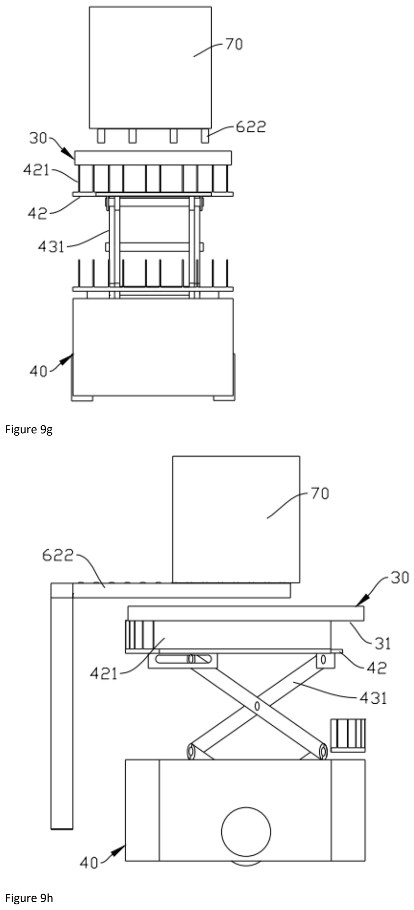

In step 104 and step 105, the second docking position is a docking position of a workstation, and the handling robot separates the goods from the tray and transfers the goods to the workstation docking position. When the handling robot 40 moves to the second docking position, a base plate 31 of the tray 30 is located on an outer side above the comb teeth 622, in other words, the base plate 31 of the tray 30 is not obstructed by the comb teeth 622 when descending with the scissor mechanism 431. However, the finger-shaped plates 32 of the tray 30 are entirely located above the comb teeth 622 and positions thereof correspond to tooth gaps of the comb teeth 622. In this case, the plurality of first top plates 421 are inserted in the tooth gaps of the plurality of comb teeth 622 (as shown in Figure 9d, Figure 9e, and Figure 9f, a dashed line in Figure 9f is a position at which an end of the comb teeth 622 is located). The scissor mechanism 431 contracts to make the carrier platform 42 descend, to drive the tray 30 to descend together. The first top plate 421 and the finger-shaped plate 32 of the tray 30 jointly pass through the tooth gap of the comb teeth 622. After the goods 70 in the tray 30 contact the comb teeth 622, the comb teeth 622 block the goods 70 from descending any more. Therefore, the goods 70 are transferred to the second docking apparatus 62, and the tray 30 is separated from the goods 70 (as shown in Figure 9g).

Step 106: controlling the handling robot to move to a third docking position, where a third docking apparatus is arranged at the third docking position, and the third docking apparatus carries second goods.

Step 107: controlling the lifting assembly to lift, so that the tray carried by the plurality of supporting members is lifted, and the plurality of finger-shaped plates pass through the tooth gaps along the vertical direction to contact the bottom of the second goods and lift the second goods to be separated from the third docking apparatus.

Step 108: controlling the handling robot to move away from the third docking position.

In step 106 to step 108, the third docking position is also a docking position of the workstation. After transferring the goods in the tray to the second docking apparatus, the handling robot moves to the third docking position of the current workstation or another workstation to retrieve goods. The second goods are placed on the third docking apparatus of the third docking position. A structure of the third docking apparatus is the same as or similar to that of the second docking apparatus, and also includes a plurality of comb teeth arranged at intervals. A tooth gap exists between two adjacent comb teeth, and the plurality of comb teeth are configured to carry goods.

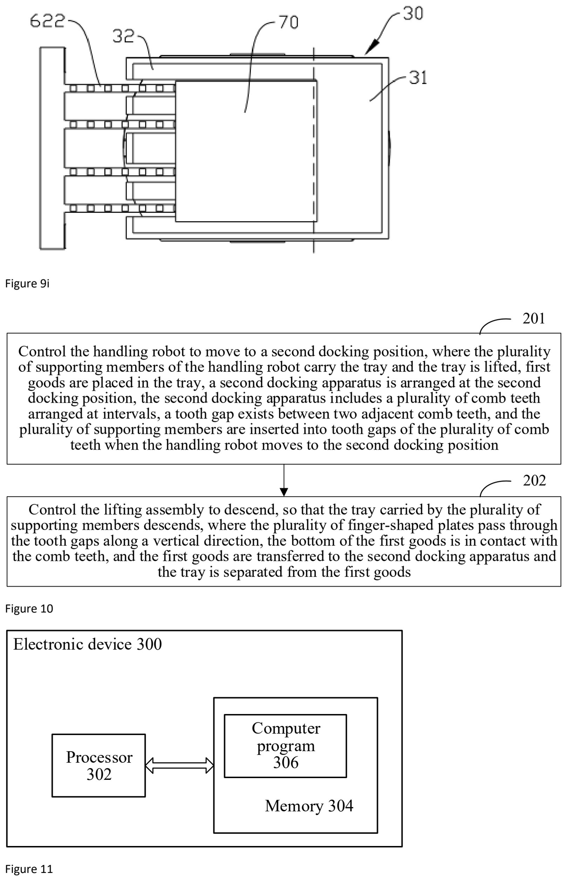

When the handling robot 40 moves to the third docking position, the base plate 31 of the tray 30 is located on an outer side under the comb teeth 622, in other words, the base plate 31 of the tray 30 is not obstructed by the comb teeth 622 when lifting with the lifting assembly 43. However, the finger-shaped plates 32 of the tray 30 are entirely located below the comb teeth 622, and positions of the plurality of finger-shaped plates 32 correspond to positions of tooth gaps of the plurality of comb teeth 622 (as shown in Figure 9h and Figure 9i, and referring to Figure 9g, a dashed line in Figure 9i is a position at which an end of the comb teeth 622 is located). The scissor mechanism 431 extends to lift the carrier platform 42, to drive the tray 30 to be lifted together. The first top plates 421 and the finger-shaped plates 32 of the tray 30 jointly pass through the tooth gap of the comb teeth 622. The tray 30 (specifically, the finger-shaped plates 32) contact the bottom of the goods 70. The scissor mechanism 431 continues to extend, to lift the tray 30 and the goods 70, so that the goods 70 are separated from the comb teeth 622 (referring to Figure 9d), and then the handling robot moves out of the third docking position.

Step 109: controlling the handling robot to move to a fourth docking position, where a fourth docking apparatus is arranged at the fourth docking position.

Step 110: controlling the lifting assembly to descend, where the plurality of supporting members pass through the beam gaps along the vertical direction, so that the tray is separated from the plurality of supporting members and is placed on the plurality of cantilevers.

In step 109 and step 110, the fourth docking position is a shelving unit docking position, and after retrieving the goods, the handling robot stores the tray containing the goods at the shelving unit docking position. A structure of the fourth docking apparatus is the same as or similar to that of the first docking apparatus, and also includes a plurality of cantilevers arranged at intervals. A beam gap exists between two adjacent cantilevers, and the plurality of cantilevers are configured to carry the tray and the goods.

When the handling robot 40 moves to the fourth docking position, the tray 30 and the goods 70 are entirely located above the cantilevers 612, and positions of the plurality of first top plates 421 correspond to positions of beam gaps of the plurality of cantilevers 612. In this case, the plurality of first top plates 421 are inserted in the beam gaps of the plurality of cantilevers 612 (referring to Figure 9c). The scissor mechanism 431 contracts to make the carrier platform 42 descend, to drive the tray 30 and the goods 70 to descend, so that the bottom of the tray 30 contacts the cantilevers 612 (referring to Figure 9b). The scissor mechanism 431 continues to contract to make the first top plate 421 descend to be lower than the bottom of the cantilevers 612, so that the first top plate 421 is separated from the bottom of the tray 30, and the tray 30 and the goods 70 in the tray are transferred to the fourth docking apparatus (referring to Figure 9a).

According to the embodiments of this application, a plurality of finger-shaped plates 32 are arranged at intervals on a side of a base plate 31 of a tray 30, the base plate 31 and the finger-shaped plates 32 jointly carry goods 70, and plate gaps exist between the finger-shaped plates 32, so that supporting members of a handling robot 40 can support the finger-shaped plates 32 to carry the tray 30 in which the goods 70 are placed and lift the tray 30. After transporting the tray 30 and the goods 70 to a second docking position, the handling robot 40 drives the supporting member to descend by using a lifting assembly 43. Because plate gaps exist between the finger-shaped plates 32, the finger-shaped plates 32, driven by the supporting members, can pass through tooth gaps of comb teeth 622 arranged at the second docking position, so that the goods 70 in the tray 30 are left above the comb teeth 622, to separate the goods 70 in the tray 30 and the tray 30. This manner has a simple structure, reduces device costs, and can simplify steps of separating the goods 70 and the tray 30, thereby improving running efficiency of the handling robot 40.

When some existing handling robots are used to separate goods and a tray, the handling robots need to first put down the tray at a workstation, then a device of the workstation separates the goods and the tray, and finally, the handling robots retrieve the tray from the workstation. By using the handling robot 40 and the tray 30 in the embodiments of this application, the handling robot 40 can directly separate the goods 70 and the tray 30 at the workstation 20, and place the goods 70 at the workstation 20. The handling robot 40 does not need to perform additional steps of retrieving the tray 30 from the workstation 20, thereby simplifying the step of separating the goods 70 and the tray 30, and the improving running efficiency of the handling robot 40. Because efficiency of separating the goods 70 and the tray 30 at the workstation 20 is improved, the quantity of workstations 20 can also be reduced, thereby saving a used area.

Figure 10 is a schematic flowchart of a goods picking and placing method according to an embodiment of this application. The method is applied to the foregoing handling robot 40. For example, the handling robot 40 includes a lifting assembly 43, a carrier platform 42, and a plurality of supporting members arranged at intervals on the carrier platform 42. The plurality of supporting members are configured to carry a tray 30. The lifting assembly 43 may lift or descend to drive the carrier platform 42 to be lifted or to descend. As shown in Figure 10, the method includes the following steps.

Step 201: controlling the handling robot to move to a second docking position, where the plurality of supporting members of the handling robot carry the tray and the tray is lifted, first goods are placed in the tray, a second docking apparatus is arranged at the second docking position, the second docking apparatus includes a plurality of comb teeth arranged at intervals, a tooth gap exists between two adjacent comb teeth, and the plurality of supporting members are inserted into tooth gaps of the plurality of comb teeth when the handling robot moves to the second docking position.

Step 202: controlling the lifting assembly to descend, so that the tray carried by the plurality of supporting members descends, where the plurality of finger-shaped plates pass through the tooth gaps along a vertical direction, the bottom of the first goods is in contact with the comb teeth, and the first goods are transferred to the second docking apparatus and the tray is separated from the first goods.

In some embodiments, after the first goods are transferred to the second docking apparatus, the method further includes:
controlling the handling robot to move to a third docking position, where a third docking apparatus is arranged at the third docking position, the third docking apparatus includes a plurality of comb teeth arranged at intervals, a tooth gap exists between two adjacent comb teeth, the plurality of comb teeth are configured to carry second goods, and positions of the plurality of finger-shaped plates correspond to positions of tooth gaps of the plurality of comb teeth when the handling robot moves to the third docking position;
controlling the lifting assembly to lift, so that the tray carried by the plurality of supporting members is lifted, and the plurality of finger-shaped plates pass through the tooth gaps along the vertical direction to contact the bottom of the second goods and lift the second goods to be separated from the third docking apparatus; and
controlling the handling robot to move away from the third docking position.

In some embodiments, the plurality of supporting members of the handling robot carry the tray and the tray is lifted, and the second goods are placed in the tray; and the method further includes:
controlling the handling robot to move to a fourth docking position, where a fourth docking apparatus is arranged at the fourth docking position, the fourth docking apparatus includes a plurality of cantilevers arranged at intervals, a beam gap exists between two adjacent cantilevers, and positions of the plurality of supporting members correspond to positions of beam gaps of the plurality of cantilevers when the handling robot moves to the fourth docking position; and
controlling the lifting assembly to descend, where the plurality of supporting members pass through the beam gaps along the vertical direction, so that the tray is separated from the plurality of supporting members and is placed on the plurality of cantilevers.

In some embodiments, before the controlling the handling robot to move to the second docking position, the method further includes:
controlling the handling robot to move to a first docking position, where a first docking apparatus is arranged at the first docking position, the first docking apparatus includes a plurality of cantilevers arranged at intervals, a beam gap exists between two adjacent cantilevers, the plurality of cantilevers carry the tray, the first goods are placed in the tray, and positions of the plurality of supporting members correspond to positions of beam gaps of the plurality of cantilevers when the handling robot moves to the first docking position;
controlling the lifting assembly to lift, where the plurality of supporting members pass through the beam gaps along the vertical direction, so that the plurality of supporting members contact the bottom of the tray and lift the tray to be separated from the first docking apparatus; and
controlling the handling robot to move away from the first docking position. Figure 11 is a schematic diagram of an electronic device according to an embodiment of this application. A specific implementation of the electronic device is not limited in a specific embodiment of this application.

As shown in Figure 11, the electronic device 300 may include a processor (processor) 302 and a memory (memory) 304.

The processor 302 is configured to execute computer program 306. For details, the related steps in the foregoing embodiments of the goods picking and placing method may be implemented.

Specifically, the computer program 306 may include computer-executable instructions.

The processor 302 may be a central processing unit (CPU), an ASIC (Application-Specific Integrated Circuit), or one or more integrated circuits configured to implement the embodiments of this application. One or more processors included in the electronic device may be processors of a same type, such as one or more CPUs; or may be processors of different types, such as one or more CPUs and one or more ASICs.

The memory 304 is configured to store the computer program 306. The memory 304 may include a high-speed random access memory (RAM), or may further include a non-volatile memory (non-volatile memory), for example, at least one magnetic disk storage.

An embodiment of this application provides a computer-readable storage medium, the storage medium stores at least one executable instruction, and when the executable instruction is run on an electronic device, the electronic device is enabled to perform the operations in the goods picking and placing method according to the foregoing embodiments.

An embodiment of this application further provides a computer program product, including a computer program. When the computer program is executed by a processor, the operations in the goods picking and placing method according to the foregoing embodiments are performed.

An embodiment of this application provides a computer program, the computer program can be invoked by a processor, so that an electronic device is enabled to perform the operations in the goods picking and placing method according to the foregoing embodiments.

The algorithms or displays provided herein are not inherited to be related to any particular computer, virtual system, or other devices. Various general-purpose systems may also be used together with the examples herein. According to the foregoing descriptions, a structure required for constructing such a system is obvious. In addition, the embodiments of this application are not targeted at any specific programming language. It should be understood that, various programming languages may be used to implement the content of this application described herein, and specific languages are described above to disclose optimal implementations of this application.

In this specification provided herein, numerous specific details are described. However, it can be understood that the embodiments of this application may be practiced without such specific details. In some examples, well-known methods, structures, and technologies are not shown in detail so as not to obscure the understanding of the specification.

Similarly, it should be understood that to simplify this application and help to understand one or more of invention aspects, in the descriptions of the example embodiments of this application, features of the embodiments of this application are sometimes grouped into a single embodiment or figure, or descriptions thereof. However, the methods in the present disclosure should not be construed as reflecting the following intention: that is, this application claimed to be protected is required to have more features than those clearly set forth in each claim.

A person skilled in the art may understand that, modules in the devices in the embodiments may be changed adaptively and disposed in one or more devices different from those in the embodiments. The modules or units or components in the embodiments may be combined into one module or unit or component, and the modules or units or components may be divided into a plurality of sub-modules or sub-units or sub-components. All features disclosed in this specification (including the accompanying claims, abstract, and drawings), and all processes or units of any method or device disclosed herein may be combined in any combination, unless such features and/or processes or units, or at least some of the features and/or processes or units are mutually exclusive. Unless otherwise explicitly stated, each feature disclosed in this specification (including the accompanying claims, abstract, and drawings) may be replaced with an alternative feature serving the same, equivalent, or similar purpose.

It should be noted that the foregoing embodiments illustrate rather than limit this application, and a person skilled in the art may devise alternative embodiments without departing from the scope of the appended claims. In the claims, any reference signs placed between parentheses shall not be construed as limiting the claims. The term "include" does not exclude presence of elements or steps not listed in the claims. The term "a/an" or "one" before an element does not exclude presence of a plurality of such elements. This application can be implemented by way of hardware including several different elements and an appropriately programmed computer. In the unit claims enumerating several apparatuses, several of these apparatuses can be specifically embodied by a same hardware item. The use of the terms such as "first", "second", and "third" does not denote any order. These terms can be interpreted as names. Unless otherwise specifically specified, the steps in the foregoing embodiments should not be construed as a limitation to an execution sequence.

## Claims

1. A tray, wherein the tray comprises:
a base plate; and
a plurality of finger-shaped plates that extend along a first direction from a first side of the base plate, wherein the plurality of finger-shaped plates are arranged at intervals along a second direction, a plate gap exists between two adjacent finger-shaped plates, the first direction and the second direction are both directions in a horizontal plane parallel to the base plate, and the first direction and the second direction intersect; and
the base plate and the plurality of finger-shaped plates are jointly configured to carry goods.

2. The tray according to claim 1, wherein the tray is configured to pick and place goods from a second docking apparatus, the second docking apparatus comprises a plurality of comb teeth arranged at intervals, a tooth gap exists between two adjacent comb teeth, and the plurality of comb teeth are configured to carry the goods; and
positions of the finger-shaped plates and positions of the tooth gaps match, and positions of the plate gaps and positions of the comb teeth match; along the second direction, a width of the finger-shaped plate is less than a tooth gap matching the finger-shaped plate, and the plate gap is greater than a width of a comb tooth matching the plate gap, so that the finger-shaped plate can pass through the tooth gap along a vertical direction when the tray picks and places goods on the second docking apparatus, so that the tray contacts the bottom of goods placed on the comb teeth to transfer goods from the second docking apparatus to the tray, or goods in the tray are released from the tray to transfer goods from the tray to the second docking apparatus.

3. The tray according to claim 1 or 2, wherein the tray is configured to be placed on a first docking apparatus, the first docking apparatus comprises a plurality of cantilevers arranged at intervals, and the plurality of cantilevers are configured to carry the tray; and
positions of the finger-shaped plates and positions of the cantilevers match, and along the second direction, the width of the finger-shaped plate is greater than a width of a cantilever matching the finger-shaped plate.

4. The tray according to claim 1, wherein the base plate and the plurality of finger-shaped plates jointly form a bottom plate of the tray, and a baffle connected to the bottom plate is vertically arranged on an outer periphery of the bottom plate.

5. The tray according to claim 1, wherein along the first direction, a size ratio of the finger-shaped plate to the base plate is greater than or equal to 2:1.

6. The tray according to claim 1, wherein the first direction is perpendicular to a side surface of the first side of the base plate, and the first direction is perpendicular to the second direction.

7. The tray according to claim 6, wherein a cross section of the finger-shaped plate is a rectangle.

8. The tray according to claim 1, wherein the bottom of the plurality of finger-shaped plates is configured to respectively contact a plurality of supporting members of a handling robot, so that the tray is carried by the plurality of supporting members.

9. A goods picking and placing method, applied to a handling robot, wherein the handling robot comprises a lifting assembly, a carrier platform, and a plurality of supporting members arranged at intervals on the carrier platform, the plurality of supporting members are configured to carry a tray, and the lifting assembly lifts or descends to drive the carrier platform to be lifted or to descend, wherein the tray comprises a base plate and a plurality of finger-shaped plates that extend along a first direction from a first side of the base plate; the plurality of finger-shaped plates are arranged at intervals along a second direction; a plate gap exists between two adjacent finger-shaped plates; the first direction and the second direction are both directions in a plane parallel to the base plate, and the first direction and the second direction intersect; and the base plate and the plurality of finger-shaped plates are jointly configured to carry goods; and
the method comprises:
controlling the handling robot to move to a second docking position, wherein the plurality of supporting members of the handling robot carry the tray and the tray is lifted, first goods are placed in the tray, a second docking apparatus is arranged at the second docking position, the second docking apparatus comprises a plurality of comb teeth arranged at intervals, a tooth gap exists between two adjacent comb teeth, and the plurality of supporting members are inserted into tooth gaps of the plurality of comb teeth when the handling robot moves to the second docking position; and
controlling the lifting assembly to descend, so that the tray carried by the plurality of supporting members descends, wherein the plurality of finger-shaped plates pass through the tooth gaps along a vertical direction, the bottom of the first goods is in contact with the comb teeth, and the first goods are transferred to the second docking apparatus and the tray is separated from the first goods.

10. The goods picking and placing method according to claim 9, wherein after the first goods are transferred to the second docking apparatus, the method further comprises:
controlling the handling robot to move to a third docking position, wherein a third docking apparatus is arranged at the third docking position, the third docking apparatus comprises a plurality of comb teeth arranged at intervals, a tooth gap exists between two adjacent comb teeth, the plurality of comb teeth are configured to carry second goods, and positions of the plurality of finger-shaped plates correspond to positions of tooth gaps of the plurality of comb teeth when the handling robot moves to the third docking position;
controlling the lifting assembly to lift, so that the tray carried by the plurality of supporting members is lifted, and the plurality of finger-shaped plates pass through the tooth gaps along the vertical direction to contact the bottom of the second goods and lift the second goods to be separated from the third docking apparatus; and
controlling the handling robot to move away from the third docking position.

11. The goods picking and placing method according to claim 9 or 10, wherein the plurality of supporting members of the handling robot carry the tray and the tray is lifted, and the second goods are placed in the tray; and the method further comprises:
controlling the handling robot to move to a fourth docking position, wherein a fourth docking apparatus is arranged at the fourth docking position, the fourth docking apparatus comprises a plurality of cantilevers arranged at intervals, a beam gap exists between two adjacent cantilevers, and positions of the plurality of supporting members correspond to positions of beam gaps of the plurality of cantilevers when the handling robot moves to the fourth docking position; and
controlling the lifting assembly to descend, wherein the plurality of supporting members pass through the beam gaps along the vertical direction, so that the tray is separated from the plurality of supporting members and is placed on the plurality of cantilevers.

12. The goods picking and placing method according to claim 9 or 10, wherein before the controlling the handling robot to move to the second docking position, the method further comprises:
controlling the handling robot to move to a first docking position, wherein a first docking apparatus is arranged at the first docking position, the first docking apparatus comprises a plurality of cantilevers arranged at intervals, a beam gap exists between two adjacent cantilevers, the plurality of cantilevers carry the tray, the first goods are placed in the tray, and positions of the plurality of supporting members correspond to positions of beam gaps of the plurality of cantilevers when the handling robot moves to the first docking position;
controlling the lifting assembly to lift, wherein the plurality of supporting members pass through the beam gaps along the vertical direction, so that the plurality of supporting members contact the bottom of the tray and lift the tray to be separated from the first docking apparatus; and
controlling the handling robot to move away from the first docking position.

13. An electronic device, comprising a processor and a memory, wherein the memory stores executable instructions, and the processor can execute the executable instructions to implement the method according to any one of claims 9 to 12.

14. A computer-readable storage medium, wherein the storage medium stores executable instructions, and the executable instructions, when executed on an electronic device, cause the electronic device to perform the method according to any one of claims 9 to 12.

15. A warehousing system, comprising:
a shelving unit, configured to store a tray, wherein the tray stores goods, the tray comprises a base plate and a plurality of finger-shaped plates that extend along a first direction from a first side of the base plate; the plurality of finger-shaped plates are arranged at intervals along a second direction; a plate gap exists between two adjacent finger-shaped plates; the first direction and the second direction are both directions in a horizontal plane parallel to the base plate, and the first direction and the second direction intersect; and the base plate and the plurality of finger-shaped plates are jointly configured to carry goods;
a workstation, configured to receive to-be-operated goods or output operated goods; and
a handling robot, wherein the handling robot comprises a lifting assembly, a carrier platform, and a plurality of supporting members arranged at intervals on the carrier platform, the plurality of supporting members are configured to carry a tray, and the lifting assembly lifts or descends to drive the carrier platform to be lifted or to descend; and the handling robot is configured to: retrieve the tray from the shelving unit, and separate the goods and the tray, to transfer the separated goods to the workstation.

16. The warehousing system according to claim 15, wherein the handling robot performs the following steps:
controlling the handling robot to travel to a second docking position, wherein the plurality of supporting members of the handling robot carry the tray and the tray is lifted, first goods are placed in the tray, a second docking apparatus is arranged at the second docking position, the second docking apparatus comprises a plurality of comb teeth arranged at intervals, a tooth gap exists between two adjacent comb teeth, and the plurality of supporting members are inserted into tooth gaps of the plurality of comb teeth when the handling robot moves to the second docking position; and
controlling the lifting assembly to descend, so that the tray carried by the plurality of supporting members descends, wherein the plurality of finger-shaped plates pass through the tooth gaps along a vertical direction, the bottom of the first goods is in contact with the comb teeth, and the first goods are transferred to the second docking apparatus and the tray is separated from the first goods.

17. The warehousing system according to claim 15, wherein a plurality of cantilevers are arranged at intervals on both a first docking apparatus and a fourth docking apparatus of the shelving unit, and a beam gap exists between two adjacent cantilevers;
a plurality of comb teeth are arranged at intervals on both the second docking apparatus and a third docking apparatus of the workstation, and a tooth gap exists between two adjacent comb teeth;
the plurality of supporting members of the handling robot are a plurality of top plates extending along the first direction, and the plurality of top plates are arranged at intervals along the second direction; and
when the handling robot is docked with the first docking apparatus or a fourth docking apparatus of the shelving unit, the top plate can pass through a beam gap between the cantilevers; and when the handling robot is docked with the second docking apparatus or the third docking apparatus of the workstation, the top plate can pass through a tooth gap between the comb teeth.

18. The warehousing system according to claim 17, wherein the quantity of cantilevers of the shelving unit and the quantity of finger-shaped plates of the tray are both N, the handling robot comprises N groups of top plates, each group of top plates comprises two top plates, a top plate gap exists between the two top plates in each group of top plates, and positions of the N cantilevers, positions of the N finger-shaped plates, and positions of the N groups of top plates match; and
along the second direction, a width of the finger-shaped plate is greater than a width of a cantilever matching the finger-shaped plate, and a top plate gap between the two top plates in each group of top plates is greater than a width of a cantilever matching the group of top plates and less than a width of a finger-shaped plate matching the group of top plates.

19. The warehousing system according to claim 17, wherein the quantity of finger-shaped plates of the tray is N, the quantity of comb teeth of the workstation is N-1, the handling robot comprises N groups of top plates, each group of top plates comprises the two top plates, a top plate group gap exists between two adjacent groups of top plates, positions of N-1 comb teeth, positions of plate gaps of the N finger-shaped plates, and positions of top plate group gaps of the N groups of top plates match, and positions of the N finger-shaped plates and positions of the N groups of top plates match; and
along the second direction, a width of the finger-shaped plate is less than a tooth gap matching the finger-shaped plate, the plate gap is greater than a width of a comb tooth matching the plate gap, a top plate gap between the two top plates in each group of top plates is less than a width of a finger-shaped plate matching the group of top plates, and a top plate group gap between two adjacent groups of top plates is greater than a width of a comb tooth matching the top plate group gap.
